(19) Europäisches Patentamt
European Patent Office
Office européen des brevets

(11) **EP 4 071 753 A1**

(12) **EUROPEAN PATENT APPLICATION**
published in accordance with Art. 153(4) EPC

(43) Date of publication:
**12.10.2022 Bulletin 2022/41**

(21) Application number: **20898287.6**

(22) Date of filing: **07.12.2020**

(51) International Patent Classification (IPC):
**G10L 15/22** (2006.01)     **H04M 1/725** (2021.01)
**G08G 1/133** (2006.01)

(52) Cooperative Patent Classification (CPC):
Y02D 30/70

(86) International application number:
**PCT/CN2020/134311**

(87) International publication number:
**WO 2021/115230 (17.06.2021 Gazette 2021/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.12.2019 CN 201911261613**

(71) Applicant: **GUANGDONG OPPO MOBILE TELECOMMUNICATIONS CORP., LTD.**
**Dongguan, Guangdong 523860 (CN)**

(72) Inventor: **CHEN, Zhe**
**Dongguan, Guangdong 523860 (CN)**

(74) Representative: **Ipside**
**7-9 Allées Haussmann**
**33300 Bordeaux Cedex (FR)**

(54) **ARRIVAL REMINDING METHOD AND APPARATUS, STORAGE MEDIUM AND ELECTRONIC DEVICE**

(57) An arrival reminding method and apparatus, a storage medium, and an electronic device. The method comprises: a processor receiving an arrival reminding request; putting the processor to sleep after determining a target public traffic station which needs to be subjected to arrival reminding; a low-power-consumption chip acquiring the number of target stations that need to be passed in order to reach the target public traffic station; and when the number of the stations that have been passed is identified, by means of a collected audio signal, and found to be consistent with the number of the target stations, waking the processor to execute a preset arrival reminding operation.

a processor receives an arrival alerting request and determines a target public transport stop that requires an arrival alerting operation to be performed based on the arrival alerting request — 101

the processor enters a sleeping mode, and the low power chip obtains a target number of stops that the electronic device needs to pass through to reach the target public transport stop — 102

the low power chip controls the microphone to capture an external audio signal and provides the audio signal to the low power chip — 103

the low power chip recognizes the audio signal to obtain the number of stops that are passed by the electronic device — 104

in response to the number of the above-mentioned public transport stops being equal to the target number of public transport stops, the low power chip wakes up the processor, and the processor performs a predetermined arrival alerting operation — 105

FIG. 1

## Description

The present application claims priority of Chinese Patent Application No. 201911261613.X, filed on December 10, 2019, in the title of "ARRIVAL ALERTING METHOD, DEVICE, STORAGE MEDIUM AND ELECTRONIC DEVICE", in China National Intellectual Property Administration, the entire contents of which are hereby incorporated by reference in their entireties.

## TECHNICAL FIELD

The present disclosure relates to the field of audio recognition, and in particular to an arrival alerting method, an arrival alerting apparatus, a storage medium, and an electronic device.

## BACKGROUND

Electronic devices, such as smart phones and tablets, have been widely used in people's daily lives. People can install various applications in the electronic devices to expand functions of the devices, such as gaming, socializing, shopping, and so on. When travelling on public transport, people may miss a stop while focusing on using the electronic devices. Therefore, in the art, satellite positioning may be performed to determine whether a stop is reached, and to alert people when the stop is reached.

## SUMMARY OF THE DISCLOSURE

The present disclosure provides an arrival alerting method, an arrival alerting apparatus, a storage medium, and an electronic device, which may reduce power consumption of the electronic device while performing arrival alerting.

According to a first aspect, an arrival alerting method is applied to an electronic device. The electronic device includes a microphone, a processor, a low power chip, and power consumption of the low power chip is less than that of the processor. The method includes:

receiving, via the processor, an arrival alerting request and determining a target public transport stop that requires an arrival alerting operation to be performed based on the arrival alerting request;
the processor entering a sleeping mode, and obtaining, via the low power chip, a target number of public transport stops that the electronic device needs to pass through to reach the target public transport stop;
controlling, via the low power chip, the microphone to capture an external audio signal and to provide the audio signal to the low power chip;
recognizing, via the low power chip, the audio signal to obtain the number of public transport stops that are passed by the electronic device; and
waking up the processor via the low power chip in response to the number of public transport stops being equal to the target number of public transport stops; and performing, via the processor, a predetermined arrival alerting operation.

According to a second aspect, an arrival alerting apparatus is applied to an electronic device. The electronic device includes a microphone, a processor, a low power chip, and power consumption of the low power chip is less than that of the processor. The arrival alerting apparatus includes:

a request receiving module, configured to receive an arrival alerting request via the processor and determine a target public transport stop that an arrival alerting operation is required to be performed, based on the arrival alerting request;
a number determination module, configured to enable the processor to enter the sleeping mode and obtain, via the low power chip, the target number of public transport stops that the electronic device needs to pass to reach the target public transport stop;
an audio capturing module, configured to control, via the low power chip, the microphone to capture the external audio signal and provide the audio signal to the low power chip;
an audio recognition module, configured to recognize, via the low power chip, the audio signal to obtain the number of public transport stops that are passed by the electronic device; and
an arrival alerting module, configured to wake up the processor via the low power chip when the number of public transport stops is equal to the target number of public transport stops and configured to execute, via the processor, a predetermined arrival alerting operation.

According to a third aspect, a storage medium is provided and stores computer programs. The computer programs are capable of being executed in an electronic device. The electronic device includes a microphone, a processor, and a low power chip, and power consumption of the low power chip is less than that of the processor. When the computer programs are executed, the electronic device is enabled to perform operations of the arrival alerting method according to the present disclosure.

According to a fourth aspect, an electronic device includes a microphone, a processor, and a low power chip, and power consumption of the low power chip is less than that of the processor.

The processor is configured to receive an arrival alerting request, determine a target public transport stop that requires an arrival alerting operation to be performed based on the arrival alerting request, and enter a sleeping mode after setting the target public transport stop.

The low power chip is configured to:

obtain a target number of public transport stops that the electronic device needs to pass through to reach the target public transport stop;

capture, via the microphone, an external audio signal;

recognize the audio signal to obtain the number of public transport stops that are passed by the electronic device; and

wake up the processor in response to the number of the public transport stops being equal to the target number of public transport stops.

The processor is further configured to perform a predetermined arrival alerting operation.

## BRIEF DESCRIPTION OF THE DRAWINGS

In order to illustrate the technical solutions in embodiments of the present disclosure more clearly, the accompanying drawings used in the description of the embodiments will be briefly introduced. Apparently, the following drawings are only some of the embodiments of the present disclosure, and other drawings may be obtained based on these drawings without any creative work by those skilled in the art.

FIG. 1 is a flow chart of an arrival alerting method according to an embodiment of the present disclosure.

FIG. 2 illustrates an interface of triggering to display an arrival alert according to an embodiment of the present disclosure.

FIG. 3 is a language spectrum figure of a prompt tone while a door of a subway train is opening and closing according to an embodiment of the present disclosure.

FIG. 4 illustrates performing a non-overlapping frame splitting operation on an audio signal according to an embodiment of the present disclosure.

FIG. 5 is another flow chart of an arrival alerting method according to an embodiment of the present disclosure.

FIG. 6 is a structural schematic view of an arrival alerting apparatus according to an embodiment of the present disclosure.

FIG. 7 is a structural schematic view of an electronic device according to an embodiment of the present disclosure.

## DETAILED DESCRIPTION

As shown in the drawings, a same component reference numeral represents a same component. Principles of the present disclosure will be illustrated by way of implementation in an appropriate computing environment. Following description is based on specific embodiments of the present disclosure, and shall not be considered as limiting other embodiments of the present disclosure which are not described in detail herein.

The present disclosure provides an arrival alerting method, an arrival alerting apparatus, a storage medium, and an electronic device. The arrival alerting method may be performed by the arrival alerting apparatus provided by embodiments of the present disclosure or by an electronic device incorporating the arrival alerting apparatus. The arrival alerting apparatus may be implemented in hardware or software. The electronic device may be a computing device, such as a laptop computer, a computer monitor incorporating an embedded computer, a tablet computer, a cellular telephone, a media player, or other handheld or portable electronic devices, a small-sized device (such as a wrist watch, a hanging device, a headphone or an earpiece device, a device embedded in eyeglasses or other head-mounted devices, or other wearable or miniature devices), a gaming device, a navigation device, an embedded system, and so on.

According to a first aspect, an arrival alerting method is applied to an electronic device. The electronic device includes a microphone, a processor, a low power chip, and power consumption of the low power chip is less than that of the processor. The method includes:

receiving, via the processor, an arrival alerting request and determining a target public transport stop that requires an arrival alerting operation to be performed based on the arrival alerting request;

the processor entering a sleeping mode, and obtaining, via the low power chip, a target number of public transport stops that the electronic device needs to pass through to reach the target public transport stop;

controlling, via the low power chip, the microphone to capture an external audio signal and to provide the audio signal to the low power chip;

recognizing, via the low power chip, the audio signal to obtain the number of public transport stops that are passed by the electronic device; and

waking up the processor via the low power chip in response to the number of public transport stops being equal to the target number of public transport stops; and performing, via the processor, a predetermined arrival alerting operation.

In some embodiments, the recognizing, via the low power chip, the audio signal to obtain the number of public transport stops that are passed by the electronic device, includes:

determining, via the low power chip, whether the audio signal includes a frequency component corresponding to the public transport stop ; and

obtaining, via the low power chip, the number of the public transport stops based on the number of times that the audio signal is determined as including the frequency component corresponding to the public transport stop.

In some embodiments, the determining, via the low power chip, whether the audio signal includes a frequency component corresponding to the public transport stop , includes:
determining, via the low power chip, whether a duration of the frequency component corresponding to the public transport stop in the audio signal reaches a predetermined duration; and determining the audio signal comprises the frequency component corresponding to the public transport stop in response to the duration of the frequency component corresponding to the public transport stop in the audio signal reaching the predetermined duration.

In some embodiments, the determining, via the low power chip, whether a duration of the frequency component corresponding to the public transport stop in the audio signal reaches a predetermined duration, includes:

performing, via the low power chip, a non-overlapping frame splitting process on the audio signal to obtain a plurality of audio frames; and
performing, via the low power chip, a Fourier transform on the plurality of audio frames, determining whether amplitudes of consecutive audio frames of the plurality of audio frames of the frequency component within the predetermined duration each reaches a predetermined amplitude, and determining that the duration of the frequency component in the audio signal reaches the predetermined duration in response to the amplitudes of consecutive audio frames of the plurality of audio frames of the frequency component within the predetermined duration each reaching the predetermined amplitude.

In some embodiments, before the determining, via the low power chip, whether the audio signal includes a frequency component corresponding to the public transport stop , the method further includes:
filtering, via the low power chip, a human voice frequency component out of the audio signal.

In some embodiments, before the waking up the processor via the low power chip, the method further includes:

obtaining, via the low power chip, a base station identifier of a base station that establishes mobile communication connection with the electronic device in response to the number of public transport stops that are passed by the electronic device is equal to the target number of public transport stops; and
determining, via the low power chip, a public transport stop corresponding to the base station identifier based on predetermined correspondence between the base station identifier and the public transport stop; and

waking up the processor via the low power chip in response to the public transport stop being the target public transport stop.

In some embodiments, before the receiving, via the processor, an arrival alerting request, the method further includes:

generating, via the low power chip, an application entrance for a public transport application, when the processor is in the sleeping mode;
controlling, via the low power chip, the application entrance to be displayed on a screen of the electronic device in a screen-off manner; and
waking up the processor via the low power chip in response to a triggering operation performed on the application entrance being received; running, via the processor, the public transport application in the foreground.

The receiving, via the processor, an arrival alerting request, includes:
receiving, via the public transport application run in the foreground, the arrival alerting request.

In some embodiments, the waking up the processor via the low power chip in response to the number of public transport stops being equal to the target number of public transport stops; and performing, via the processor, a predetermined arrival alerting operation, includes:

determining, via the low power chip, a current public transport stop in real time that the electronic device is currently arriving based on the number of public transport stops;
obtaining, via the low power chip, in real time a stop information of the current public transport stop; and
controlling, via the low power chip, the stop information to be displayed on a screen of the electronic device in the screen-off manner.

In some embodiments, the obtaining, via the low power chip, a target number of public transport stops that the electronic device needs to pass through to reach the target public transport stop, includes:

determining, via the low power chip, a current public transport stop that the electronic device is currently arriving;
obtaining, via the low power chip, a route information that comprises a route from the current public transport stop to the target public transport stop; determining the target number of public transport stops based on the route information, the current public transport stop and the target public transport stop.

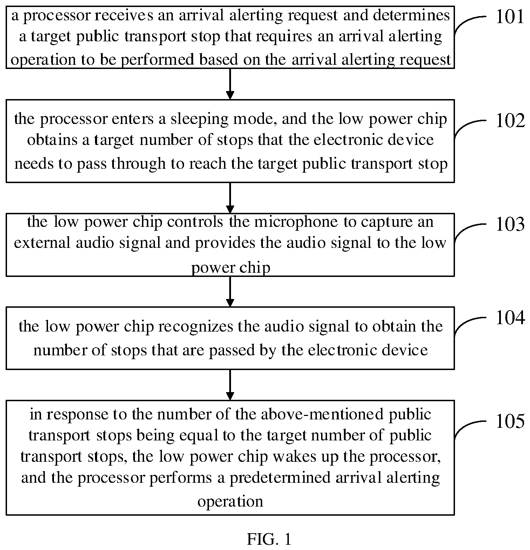

As shown in FIG. 1, FIG. 1 is a flow chart of an arrival alerting method according to an embodiment of the present disclosure. The arrival alerting method is applied to an electronic device provided by the present disclosure. The electronic device includes a processor, a low power chip and a microphone. As shown in FIG. 1, the arrival alerting method provided by an embodiment of the present disclosure may include following operations.

In an operation 101, a processor receives an arrival alerting request and determines a target public transport stop that requires an arrival alerting operation to be performed based on the arrival alerting request.

To be noted that, public transports mentioned in the following embodiments include, but are not limited to, subways, buses, and so on.

In the present embodiment, the low power chip has an audio recognition capability. Power consumption of the low power chip may be less than that of the processor of the electronic device. Any ordinary skilled person in the art may select a processor model and a low power chip model depending on actual needs. For example, a processor model that can be selected may include, but not limited to, Snapdragon 855+, Snapdragon 845, Snapdragon 820, Snapdragon 810 and Snapdragon 710. The low power chip model that can be selected may include, but not limited to, LPCXpresso 54628, LPC2138, LPC2138, LPC54114 and LPC3100.

In the present embodiment, the processor is in a sleeping mode when a screen of the electronic device is off, and the low power chip is in the sleeping mode when the screen is on. In addition, the microphone included in the electronic device may be either a built-in microphone or an external microphone (either wired or wireless).

The processor receives the arrival alerting request input by a user when the screen of the electronic device is on. For example, the processor receives the arrival alerting request, which is entered by the user via an arrival alerting interface provided by a public transport application running in a foreground.

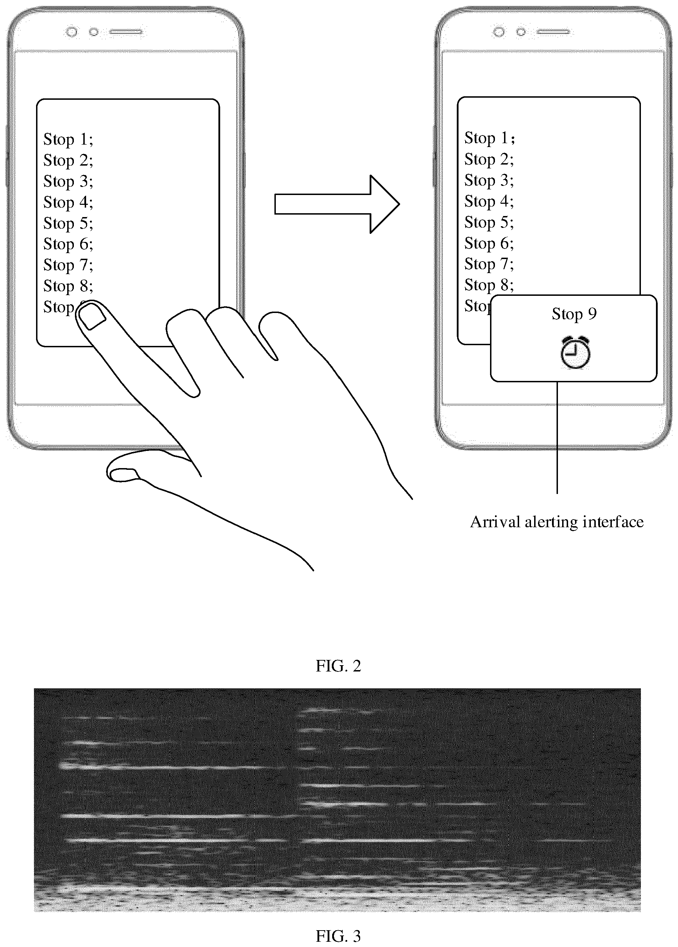

For example, as shown in FIG. 2, a left-hand side of FIG. 2 illustrates a route interface provided by the public transport application. The interface shows all public transport stops that a public transport line may stop, i.e., a stop 1 to a stop 9 of the transport line. The processor may display an arrival alerting interface based on a click performed by the user on any public transport stop. For example, the figure shows an arrival alerting interface corresponding to the stop 9. Subsequently, the arrival alerting request for the stop 9 may be received via an "alarm clock" control in the arrival alerting interface. The arrival alerting request carries a stop identifier (such as a name of the stop 9) corresponding to the stop 9.

After receiving the input arrival alerting request, the processor parses the request to obtain the stop identifier carried by the arrival alerting request and sets a public transport stop corresponding to the stop identifier as a target public transport stop that requires the arrival alerting operation to be performed.

In an operation 102, the processor enters a sleeping mode, and the low power chip obtains a target number of stops that the electronic device needs to pass through to reach the target public transport stop.

The processor, after determining the target public transport stop that requires the arrival alerting operation to be performed, wakes up the low power chip and indicates the target public transport stop, which requires the arrival alerting operation to be performed, to the low power chip.

For example, in the Android operating system, the processor transmits an indication information to the low power chip via a hardware abstraction layer and a driver layer, and takes the indication information to indicate the target public transport stop, which requires the arrival alerting operation to be performed, to the low power chip. The indication information is configured to indicate the target public transport stop.

After indicating the target public transport stop, which requires the arrival alerting operation to be performed, to the low power chip, the processor may sleep in response to a received screen-off operation.

In another aspect, the low power chip determines the target public transport stop that requires the arrival alerting operation to be performed based on indication of the processor. Subsequently, the low power chip obtains a base station identifier of a current base station. The current base station currently establishes mobile communication connection with the electronic device. Further, the low power chip determines a public transport stop corresponding to the current base station based on predetermined correspondence between a base stop identifier and a public transport stop, and takes the public transport stop corresponding to the current base station as a current public transport stop.

To be noted that, the base station provides network access to the electronic device, and a location of the base station is usually fixed. A location of the electronic device may be determined when mobile communication connection is established between the electronic device and a certain base station. Therefore, in the present embodiment, the base station is associated with a nearest public transport stop in advance. Further, the correspondence between the base station identifier and the public transport stop is established. The base station identifier is configured to uniquely represent the base station. Any ordinary skilled person in the art may determine a parameter to be taken as the base station identifier according to actual needs. For example, in the present embodiment, a cell identifier in combination with a location area code may be taken as the base station identifier.

After determining the current public transport stop, the low power chip obtains a pre-stored route information, the route information includes a route from the current public transport stop to the target public transport stop. Further, the low power chip determines the target number of public transport stops that the electronic device needs to pass from the current public transport stop to reach the target public transport stop, based on the route information, the current public transport stop and the target public transport stop.

For example, for the public transport route from the public transport stop 1 to the public transport stop 9 shown in FIG. 2, when the target public transport stop is the public transport stop 9, and when the current public transport stop is determined as the public transport stop 3, the low power chip may determine that the target number of public transport stops that the electronic device needs to pass through to reach the target public transport stop is 6.

In an operation 103, the low power chip controls the microphone to capture an external audio signal and provides the audio signal to the low power chip.

After determining the target number of public transport stops that the electronic device needs to pass through to reach the target public transport stop, the low power chip controls the microphone to capture a sound, and the microphone provides the captured external audio signal to the low power chip.

To be noted that, the microphone can be either a microphone configured inside the electronic device or an external microphone (either wired or wireless).

In an operation 104, the low power chip recognizes the audio signal to obtain the number of stops that are passed by the electronic device.

When the low power chip receives the audio signal from the microphone, the low power chip recognizes the received audio signal to determine an audio signal of a public transport stop that is passed by the electronic device. In this way, the low power chip determines the number of public transport stops that are passed by the electronic device, based on the number of determined audio signals of public transport stops that are passed by the electronic device.

For example, the low power chip may determine whether the audio signal provided by the microphone includes an audio feature of the public transport stop. In response to the audio signal provided by the microphone including the audio feature of the public transport stop, the low power chip may determine the audio signal is an audio signal of a public transport stop that is passed by the electronic device.

In another example, the low power chip may directly compare the audio signal provided by the microphone with a pre-captured audio signal of the public transport stop that is passed by the electronic device. In response to the provided audio signal being consistent with the pre-captured audio signal, the low power chip may determine that the provided audio signal is the audio signal of the public transport stop that is passed by the electronic device.

In an operation 105, in response to the number of the above-mentioned public transport stops being equal to the target number of public transport stops, the low power chip wakes up the processor, and the processor performs a predetermined arrival alerting operation.

The low power chip determines in real time whether the number of public transport stops that the are passed by the electronic device is equal to the target number of public transport stops. The number of public transport stops that are passed by the electronic device being equal to the target number of public transport stops may indicate that the electronic device reaches the target public transport stop that the arrival alerting operation needs to be performed.

The low power chip wakes up the processor and indicates to the processor that the electronic device has arrived at the target public transport stop. The processor performs the predetermined arrival alerting operation.

For example, the low power chip sends a predefined interrupt signal to the processor. The low power chip takes the interrupt signal to wake up the processor. Subsequently, the low power chip provides the indication information to the processor via the hardware abstraction layer and the driver layer, and the indication information indicates that the electronic device has arrived at the target public transport stop. The processor performs the predetermined arrival alerting operation.

In addition, a type of the arrival alerting operation is not specifically limited in the present disclosure and may be determined by any ordinary skilled person in the art according to actual needs. The type of the arrival alerting operation includes but not is limited to an audio, a video, an image, a text, and so on. For example, the processor may play a predetermined arrival alarm tone to alert the user that the target public transport stop is arrived.

According to the present embodiment, the processor receives the arrival alerting request. The target public transport stop that the arrival alerting operation needs to be performed is determined based on the arrival alerting request. Subsequently, the processor may enter the sleeping mode. The low power chip obtains the target number of public transport stops that the electronic device needs to pass through to reach the target public transport stop. The low power chip controls the microphone to capture the external audio signal. The low power chip recognizes the captured audio signal to obtain the number of public transport stops that are passed by the electronic device has passe. When the number of public transport stops that are passed by the electronic device is the same as the target number of public transport stops, the low power chip wakes up the processor. The processor performs the predetermined arrival alerting operation. According to the present embodiment, the processor does not need to operate continuously, and satellite locating does not need to be performed. In this way, power consumption of the electronic device for performing the arrival alerting operation may be reduced effectively.

In an embodiment, the operation of the low power chip recognizing the audio signal to obtain the number of public transport stops that are passed by the electronic device, includes following operations.

(1) The low power chip determines whether the audio signal includes a frequency component corresponding to the public transport stop that is passed by the electronic device.

(2) The low power chip obtains the number of the above-mentioned public transport stops based on the number of times that the low power chip determining that the audio signal including the frequency component corresponding to the public transport stop.

For example, taking subway train stops as an example, as shown in FIG. 3, FIG. 3 is a language spectrum figure of a prompt tone while a door of a subway train is opening and closing according to an embodiment of the present disclosure. According to the language spectrum figure, the tone for prompting the door of the subway train to be open or closed includes a plurality of frequency components. Correspondence between a subway train stop and a corresponding frequency component may be established in advance. Similarly, correspondence between the public transport stop and a corresponding frequency component may be established in advance.

In this way, when the number of public transport stops that are passed by the electronic device is obtained based on the audio signal, the low power chip may determine whether the audio signal provided by the microphone includes the frequency component corresponding to the public transport stop. In response to the audio signal provided by the microphone including the frequency component corresponding to the public transport stop, the low power chip may determine that the electronic device has passed one public transport stop.

Therefore, the low power chip may obtain the number of public transport stops that are passed by the electronic device, based on the number of times that the low power chip determines the audio signal provided by the microphone including the frequency component corresponding to the public transport stop. The low power chip may directly take the number of times that the low power chip determines the audio signal provided by the microphone including the frequency component corresponding to the public transport stop, as the number of public transport stops that are passed by the electronic device.

For example, the low power chip recognizes a plurality of audio signals provided by the microphone at various time points. When the number of times that the low power chip determines the audio signal including the frequency component corresponding to the public transport stop, is N, the low power chip may determine that the number of public transport stops that are passed by the electronic device is N.

In an embodiment, before the low power chip determines whether the audio signal includes the frequency component corresponding to the public transport stop, the method further includes following operations.

The low power chip filters a human voice frequency component out of the audio signal.

Before recognizing the audio signal, the human voice frequency component in the audio signal may be extracted and filtered out to reduce interference with the determination caused by of the human voice frequency component.

In an embodiment, the operation of the low power chip determining whether the audio signal includes the frequency component corresponding to the public transport stop, includes following operations.

The low power chip determines whether a duration of the frequency component corresponding to the public transport stop in the audio signal reaches a predetermined duration. In response to the duration of the frequency component corresponding to the public transport stop in the audio signal reaching the predetermined duration, the low power chip determines that the frequency component corresponding to the public transport stop is included in the audio signal.

In the present embodiment, while the low power chip is determining whether the audio signal provided by the microphone includes the frequency component corresponding to the public transport stop, the low power chip may determine whether the duration of the frequency component corresponding to the public transport stop in the audio signal reaches the predetermined duration. When the low power chip determines that the duration of the frequency component corresponding to the public transport stop in the audio signal reaches the predetermined duration, the low power chip may determine that the audio signal includes the frequency component corresponding to the public transport stop.

To be noted that, various types of public transport stops correspond to various frequency components.

For example, taking a subway train stop as an example, the subway train stop corresponds to 7 frequency components. The 7 frequency components correspond to 7 predetermined durations. The 7 predetermined durations are different from each other. The low power chip recognizes whether a duration of each of the 7 frequency components in the audio signal provided by the microphone reaches a respective predetermined duration. In response to the duration of each of the 7 frequency components in the audio signal provided by the microphone reaching the respective predetermined duration, the low power chip may determine that the audio signal includes the frequency component corresponding to the subway train stop, and the low power chip may determine that the electronic device has passed a subway train stop.

In an embodiment, the operation of the low power chip determining whether the duration of the frequency component in the audio signal reaching the predetermined duration, includes following operations.

(1) The low power chip may perform a non-overlapping frame splitting process on the audio signal to obtain a plurality of audio frames.

(2) The low power chip may perform a Fourier transform on the plurality of audio frames. The low power chip may recognize whether amplitudes of consecutive audio frames of the plurality of audio frames of the frequency component within the predetermined duration each reaches a predetermined amplitude, based on a Fourier transform result. In response to the the amplitudes of consecutive audio frames of the frequency component within the predetermined duration each reaching the predetermined amplitude, the low power chip may determine that the duration of the frequency component in the audio signal reaches the predetermined duration.

According to the present embodiment, while determining whether the duration of the frequency component in the audio signal reaches the predetermined duration, the low power chip first performs the non-overlapping frame splitting process on the audio signal provided by the microphone to obtain the plurality of audio frames.

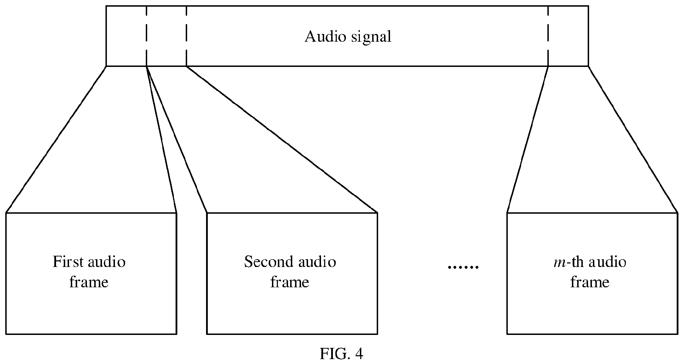

For example, as shown in FIG. 4, the low power chip performs the non-overlapping frame splitting process on the audio signal $x(n)$ provided by the microphone. A length of each of the plurality of audio frames is N. A total of m audio frames are obtained. Each of the plurality of audio frames may be expressed as $x_m(n)$. The non-overlapping frame splitting process may be commonly understood as a plurality of frames are split from each other, and any two adjacent audio frames do not overlap.

After the plurality of audio frames are obtained by frame splitting, the low power chip further performs the Fourier transform on each of the audio frames obtained by frame splitting. The low power chip may further recognize whether the amplitudes of the consecutive audio frames of the frequency component of the corresponding public transport stop within the predetermined duration each reaches the predetermined amplitude, based on the Fourier transform result. In response to the amplitudes of the consecutive audio frames of the frequency component of the corresponding public transport stop within the predetermined duration each reaching the predetermined amplitude, the low power chip may determine that the duration of the frequency component in the audio signal reaches the predetermined duration. The predetermined duration may be determined by any ordinary skilled person in the art according to actual needs, and shall not be limited by the present disclosure.

For example, the Fourier transform may be performed on the audio frame $x_m(n)$, and a corresponding Fourier transform result $X_m(n)=FFT[x_m(n)]$ may be obtained. A frequency resolution of the Fourier transform may be $f_s/N$. The $f_s$ may be a sampling frequency of the audio signal. The N may be a length of the audio frame. For any frequency component f, a position of the frequency component in the Fourier transform result $X_m(n)$ may be $i=Nf/f_s$, and may be expressed as $X_m(i)$. Subsequent-

ly, for the frequency component f' corresponding to the public transport stop, an amplitude of the frequency component $f'$ within each audio frame may be

$$A_m^{f'} = abs[X_m(i)]$$

. The abs[] represents an absolute value. For the frequency component f', when an amplitude $A_m^{f'}$ of each of consecutive audio frames of the frequency component $f'$ within a predetermined duration t reaches the preset amplitude a, the low power chip may determine that the duration of the frequency component f' in the audio signal reaches the predetermined duration t.

In an embodiment, in order to ensure an accuracy of the arrival alerting operation, before waking up the processor by the low power chip, the method further includes following operations.

(1) When the number of public transport stops that are passed by the electronic device is equal to the target number of public transport stops, the low power chip may obtain the base station identifier of the base station that establishes mobile communication connection with the electronic device.
(2) The low power chip determines a public transport stop corresponding to the base station identifier based on the predetermined correspondence between the base station identifier and the public transport stop.
(3) When the public transport stop is the target public transport stop, the low power chip wakes up the processor.

According to the present embodiment, the low power chip does not immediately wake up the processor to perform the predetermined arrival alerting operation when the low power chip determines that the number of public transport stops that are passed by the electronic device is the same as the target number of public transport stops. Instead, the low power chip first recognizes a public transport station that the electronic device is actually arriving. Only when the public transport stop that the electronic device is actually arriving is the same as the target public transport stop, the low power chip wakes up the processor to perform the predetermined arrival alerting operation.

When it is determined that the number of public transport stops passed by the electronic device is equal to the target number of public transport stops, the low power chip first obtains the base station identifier of the base station that establishes mobile communication connection with the electronic device. That is, the low power chip obtains the base station identifier of the base station that provides network access to the electronic device.

Subsequently, the low power chip determines the public transport stop corresponding to the obtained base station identifier as the public transport stop that is actually reached by the electronic device, based on the predetermined correspondence between the base station identifier and the public transport stop.

While determining the actual public transport station reached by the electronic device, the low power chip further determines whether the public transport stop that is actually reached by the electronic device is the target public transport stop. When the public transport stop that is actually reached by the electronic device is the target public transport stop, the low power chip wakes up the processor, and the processor performs the predetermined arrival alerting operation, which may be referred to the above embodiments and will not be repeated here.

In an embodiment, before the processor receives the arrival alerting request, the method may further include following operations.

(1) When the processor is in the sleeping mode, the low power chip generates an application entrance for a public transport application.
(2) The low power chip controls the application entrance to be displayed when the screen of the electronic device is off.
(3) When a triggering operation performed on the application entrance is received, the low power chip wakes up the processor, and the processor runs the public transport application in the foreground.
The operation of the processor receiving the arrival alerting request includes following operations.
(4) The public transport application run in the foreground receives the arrival alerting request.

In the present embodiment, when the processor completes installing the public transport application, the processor obtains an application entrance information configured to generate the application entrance (such as an application icon) of the public transport application. The processor provides the application entrance information to the low power chip. For example, taking the Android operating system as an example, the processor provides the application entrance information, which is configured to generate the application entrance of the public transport application, to the low power chip via the hardware abstract layer and the driver layer.

When the processor is in the sleeping mode due to the screen of the electronic device being off, the low power chip generates the application entrance of the public transport application based on the application entrance information that is provided in advance. The screen displays the generated application entrance in a screen-off manner at a predetermined displaying position. The displaying position may be determined by any ordinary skilled person in the art based on actual needs, and will not be limited by the present disclosure.

When the triggering operation performed on the displayed application entrance is received, the low power chip obtains an operation information of the triggering operation and wakes up the processor. The low power chip provides the obtained operation information to the processor to instruct the processor to run the public transport application corresponding to the application entrance in the foreground. Subsequently, the low power chip enters the sleeping mode.

After being woken up by the low power chip, the processor runs the public transport application in the foreground based on the operation information provided by the low power chip. For example, when the public transport application is already initiated and running in the background, the processor switches the public transport application to be running in the foreground. When the public transport application is not yet initiated, the processor initiates the public transport application and runs the public transport application in the foreground.

After running the public transport application in the foreground, the processor receives the arrival alerting request via the public transport application running in the foreground.

In addition, after running the public transport application in the foreground, the processor may further receive a displaying request via the public transport application. The displaying request is configured to indicate displaying a transportation code. The processor displays the transportation code based on the displaying request to enable the user to quickly pass through a metro gate, enter a bus, and the like.

In an embodiment, before the low power chip wakes up the processor when the number of public transport stops is the same as the target number of public transport stops, and the processor performs the predetermined arrival alerting operation, the method further includes the following operations.

(1) The low power chip determines the public transport stop in real time that the electronic device is currently arriving, based on the number of the abovementioned public transport stops.
(2) The low power chip obtains in real time a stop information of the current public transport stop.
(3) The low power chip controls the stop information to be displayed on the screen of the electronic device in the screen-off manner.

In the present embodiment, the low power chip further determines in real time the public transport stop at which the electronic device is currently arriving based on the number of stops that are passed by the electronic device, when the number of stops that are passed by the electronic device does not reach the target number of public transport stops.

For example, for the public transport line from the public transport stop 1 to the public transport stop 9 shown in FIG. 2, the target public transport stop is the public transport stop 9, and the current public transport stop is determined to be a public transport stop 3. At a first time point, when the low power chip determines that the number of stops that are passed by the electronic device is 3, the low power chip determines that the public transport stop that the electronic device is currently arriving is a public transport stop 6. At second time point later than the first time point, when the low power chip determines that the number of stops that are passed by the electronic device is 4, the low power chip determines that the public transport stop that the electronic device is currently arriving is a public transport stop 7.

After determining the public transport stop at which the electronic device is currently arriving, the low power chip further obtains the stop information of the current public transport stop and controls the obtained stop information to be displayed on the screen of the electronic device in the screen-off manner.

Alternatively, in addition to obtaining the stop information of the above-mentioned current public transport stop and displaying the stop information in the screen-off manner, the low power chip may further obtain in real time a stop information of a next public transport stop. The stop information of the current public transport stop and the stop information of the next public transport stop may be displayed at the same time.

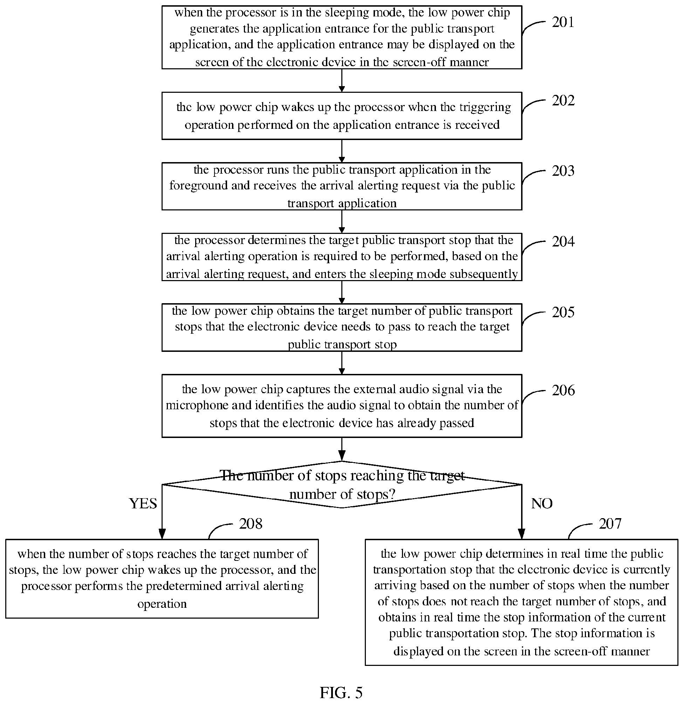

FIG. 5 is another flow chart of an arrival alerting method according to an embodiment of the present disclosure. The arrival alerting method may be applied to the electronic device of the present disclosure. The electronic device may include a processor, a low power chip, and a microphone. As shown in FIG. 5, the arrival alerting method may include following operations.

In an operation 201, when the processor is in the sleeping mode, the low power chip generates the application entrance for the public transport application, and the application entrance may be displayed on the screen of the electronic device in the screen-off manner.

In the present embodiment, when the processor completes installing the public transport application, the processor obtains the application entrance information configured to generate the application entrance (such as the application icon) of the public transport application and provides the application entrance information to the low power chip. For example, taking the Android operating system as an example, the processor provides the application entrance information configured to generate the application entrance to the low power chip via the hardware abstraction layer and driver layer.

When the processor is in the sleeping mode due to the screen of the electronic device being off, the low power chip generates the application entrance of the public transport application based on the application entrance information provided by the processor in advance. The screen displays the generated application entrance at the predetermined displaying position of the screen in the screen-off manner. The displaying position can be determined by any ordinary skilled person in the art according to actual needs, and will not be limited by the present disclosure.

In an operation 202, the low power chip wakes up the processor when the triggering operation performed on the application entrance is received.

When the triggering operation performed on the application entrance is received, the low power chip obtains the operation information of the triggering operation and wakes up the processor. The low power chip provides the obtained operation information to the processor to instruct the processor to run the public transportation application corresponding to the application entrance in the foreground. After providing the obtained operation information to the processor, the low power chip enters the sleeping state.

For example, taking the Android operating system as the example, the low power chip provides the obtained operation information to the processor via the hardware abstraction layer and driver layer.

In an operation 203, the processor runs the public transport application in the foreground and receives the arrival alerting request via the public transport application.

Accordingly, after the processor is woken up by the low power chip, the processor runs the public transport application in the foreground based on the operation information provided by the low power chip. For example, when the public transport application is already initiated and running in the background, the processor switches to run the public transport application in the foreground. When the public transport application is not yet initiated, the processor imitates the public transport application and runs the public transport application in the foreground.

After running the public transport application in the foreground, the processor receives the arrival alerting request via the public transport application running in the foreground.

For example, the processor receives the arrival alerting request input by the user via an arrival alerting interface provided by the public transport application running in the foreground.

For example, as shown in FIG. 2, a left hand side of FIGS. 2 shows a stop route interface provided by the public transport application. The interface includes all public transport stops that a public transport line can pass. That is, the public transport stop 1 to the public transport stop 9 are shown in the figure. The processor may display the arrival alerting interface based on the user's click performed on any public transport stop. For example, the arrival alerting interface corresponding to public transport stop 9 is shown in the figure. Subsequently, the arrival alerting request corresponding to the public transport stop 9 may be received via the "alarm clock" control in the arrival alerting interface. The arrival alerting request corresponding to the public transport stop 9 carries the stop identifier (such as the name of the stop 9) corresponding to the public transport stop 9.

After running the public transportation application in the foreground, the processor may further receive the displaying request via the public transportation application. The displaying request indicates displaying the transportation code. The processor controls the transportation code to be displayed based on the displaying request, enabling the user to quickly pass through the subway gate, enter the bus, and the like.

In an operation 204, the processor determines the target public transport stop that the arrival alerting operation is required to be performed, based on the arrival alerting request, and enters the sleeping mode subsequently.

After receiving the arrival alerting request input by the user, the processor parses the arrival alerting request to obtain the stop identifier carried by the arrival alerting request. The processor sets the public transport stop corresponding to the stop identifier as the target public transport stop that the arrival alerting operation is required to be performed.

After determining the target public transport station that the arrival alerting operation is required to be performed, the processor wakes up the low power chip and indicates to the low power chip the target public transport stop that the arrival alerting operation is required to be performed.

For example, taking the Android operating system as the example, the processor transmits the indication information, which indicates the target public transport stop, to the low power chip via the hardware abstraction layer and the driver layer, and takes the indication information to indicate to the low power chip the target public transport stop that the arrival alerting operation is required to be performed.

After the processor indicates to the low power chip the target public transport stop that the arrival alerting operation is required to be performed, the processor enters the sleeping mode in response to receiving a screen-off operation.

In an operation 205, the low power chip obtains the target number of public transport stops that the electronic device needs to pass to reach the target public transport stop.

The low power chip determines the target public transport stop that the arrival alerting operation is required to be performed, based on instructions of the processor. Subsequently, the low power chip obtains the base station identifier of the current base station that establishes mobile communication connection with the electronic device. The low power chip determines the public transport stop corresponding to the current base station based on the predetermined correspondence between the base station identifier and the public transport stop, and takes the public transport stop corresponding to the current base station as the current public transport stop.

To be noted that, the base station provides network access to the electronic device, and the location of the base station is usually fixed. The location of the electronic device may be determined when mobile communication connection is established between the electronic device and a particular base station. Therefore, in the present embodiment, the base station is associated with the nearest public transport stop in advance, and the correspondence between the base station identifier and the public transport stop is further established. The base station identifier is configured to uniquely represent the base station. Any ordinary skilled person in the art may determine the parameter to be taken as the base station identifier according to practical needs. For example, in the present embodiment, the cell identifier in combination with the location area code may be taken as the base station identifier.

After determining the current public transport stop, the low power chip obtains a pre-stored route information, the route information includes a route from the current public transport stop to the target public transport stop. The low power chip determines the target number of public transport stops that the electronic device needs to pass through, from the current public transport stop to reach the target public transport stop, based on the route information, the current public transport stop and the target public transport stop.

For example, for the public transport route from the public transport stop 1 to the public transport stop 9 shown in FIG. 2, the target public transport stop is the public transport stop 9. When the current public transport stop is determined to be the public transport stop 3, the low power chip may determine that the target number of public transport stops that the electronic device needs to pass through to reach the target public transport stop is 6.

In an operation 206, the low power chip captures the external audio signal via the microphone and identifies the audio signal to obtain the number of stops that the electronic device has already passed.

After determining the target number of public transport stops that the electronic device needs to pass through to reach the target public transport stop, the low power chip controls the microphone to capture the audio signal and provides the captured external audio signal to the low power chip.

To be noted that, the microphone may be either the microphone built in the electronic device or the external microphone (either wired or wireless).

When receiving the audio signal provided by the microphone, the low power chip recognizes the received audio signal, and determines the audio signal of the stop that is passed by the electronic device. In this way, the low power chip obtains the number of public transport stops that are passed by the electronic device, based on the number of determined audio signals of stop that are passed by the electronic device.

In an embodiment, the low power chip performs the non-overlapping frame splitting process on the audio signal to obtain a plurality of audio frames. For example, as shown in FIG. 4, the low power chip performs the non-overlapping frame splitting process on the audio signal $x(n)$ provided by the microphone. A length of each of the plurality of audio frames is N. A total of m audio frames are obtained. Each of the plurality of audio frames may

be expressed as $x_m(n)$. The non-overlapping frame splitting process may be commonly understood as a plurality of frames are split, and any two adjacent audio frames do not overlap.

After the plurality of audio frames are obtained by frame splitting, the low power chip further performs the Fourier transform on each of the audio frames obtained by frame splitting. The low power chip may further recognize whether the amplitudes of the consecutive audio frames of the frequency component of the corresponding public transport stop within the predetermined duration each reaches the predetermined amplitude, based on the Fourier transform result. In response to the amplitudes of the consecutive audio frames of the frequency component of the corresponding public transport stop within the predetermined duration each reaching the predetermined amplitude, the low power chip may determine that the audio signal is an audio signal of the public transport stop passed by the electronic device. The predetermined duration may be determined by any ordinary skilled person in the art according to actual needs, and shall not be limited by the present disclosure.

For example, a fast Fourier transform may be performed on the audio frame $x_m(n)$, which is obtained by performing the frame splitting on the audio signal $x(n)$, and a corresponding Fourier transform result $X_m(n)=FFT[x_m(n)]$ may be obtained. A frequency resolution of the Fourier transform may be $f_s/N$. The $f_s$ may be a sampling frequency of the audio signal. The N may be a length of the audio frame. For any frequency component f, a position of the frequency component in the Fourier transform result $X_m(n)$ may be $i=Nf/f_s$, and may be expressed as $X_m(i)$. Subsequently, for the frequency component $f'$ corresponding to the public transport stop, an amplitude of the frequency component $f'$ within each

audio frame may be $A_m^{f'} = abs[X_m(i)]$. The abs[] represents an absolute value. For the frequency component f', when an amplitude $A_m^{f'}$ of each of consecutive audio frames of the frequency component $f'$ within a predetermined duration t reaches the preset amplitude a, the low power chip may determine that the duration of the frequency component $f'$ in the audio signal reaches the predetermined duration t.

In this way, the low power chip may directly take the number of audio signals, which indicate a public transport stop is passed by the electronic device, as the number of stops that are passed by the electronic device.

For example, the low power chip recognizes a plurality of audio signals provided by the microphone at various time points. When each of N audio signals is recognized as an audio signal indicating a public transport stop is passed, the low power chip determines that the number of stops that are passed by the electronic device is N.

In an operation 207, the low power chip determines in real time the public transportation stop that the electronic device is currently arriving based on the number of stops when the number of stops does not reach the target number of stops, and obtains in real time the stop information of the current public transportation stop. The stop information is displayed on the screen in the screen-off manner.

In the present embodiment, the low power chip further determines in real time the public transportation top that the electronic device is currently arriving based on the number of stops that are passed by the electronic device, when the number of stops that the electronic device has passed does not reached the target number of stops.

For example, for the public transport line from the public transport stop 1 to the public transport stop 9 shown in FIG. 2, the target public transport stop is the public transport stop 9. The current public transport stop is determined to be the public transport stop 3. At a first time point, when the low power chip determines that the number of stops that are passed by the electronic device is 3, the low power chip determines that the public transport stop that the electronic device is currently arriving is a public transport stop 6. At second time point later than the first time point, when the low power chip determines that the number of stops that are passed by the electronic device is 4, the low power chip determines that the public transport stop that the electronic device is currently arriving is a public transport stop 7.

After determining the public transport stop at which the electronic device is currently arriving, the low power chip further obtains the stop information of the current public transport stop and controls the obtained stop information to be displayed on the screen of the electronic device in the screen-off manner.

Alternatively, in addition to obtaining the stop information of the above-mentioned current public transport stop and displaying the stop information in the screen-off manner, the low power chip may further obtain in real time the stop information of the next public transport stop. The stop information of the current public transport stop and the stop information of the next public transport stop may be displayed at the same time.

In an operation 208, when the number of stops reaches the target number of stops, the low power chip wakes up the processor, and the processor performs the predetermined arrival alerting operation.

In the present embodiment, when determining that the number of stops that are passed by the electronic device reaches the target number of stops, the low power chip first recognizes the public transport stop that the electronic device is actually arriving. Only when the public transport stop that the electronic device is actually arriving is the same as the target public transport stop, the low power chip wakes up the processor to perform the predetermined arrival alerting operation. When it is determined that the number of stops that are passed by the electronic device is equal to the target number of stops, the low power chip first obtains the base station identifier of the base station which establishes mobile communication connection with the electronic device. That is, the low power chip obtains the base station identifier of the base station that provides network access to the electronic device.

Subsequently, the low power chip determines the public transport stop corresponding to the obtained base station identifier as the public transport stop that the electronic device is actually arriving, based on the predetermined correspondence between the base station identifier and the public transport stop.

After determining the public transport stop that the electronic device is actually arriving, the low power chip further determines whether the public transport stop actually reached by the electronic device is the target public transport stop. When the public transport stop that the electronic device is actually arriving is the target public transport stop, the low power chip wakes up the processor, and the processor performs the predetermined arrival alerting operation.

The type of the arrival alerting operation is not specifically limited by the present embodiment and may be determined by any ordinary skilled person in the art based on actual needs. The type includes but is not limited to an audio, a video, an image, a text, and the like. For example, the processor may play a predetermined arrival alarm tone, and take the arrival alarm tone to alert the user that the user is currently arriving at the stop.

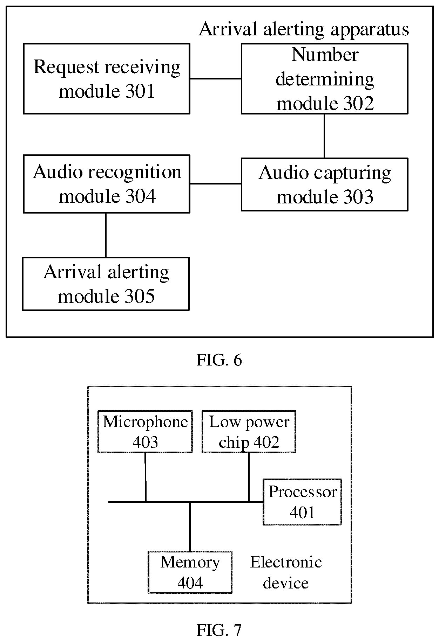

As shown in FIG. 6, FIG. 6 is a structural schematic view of an arrival alerting apparatus according to an embodiment of the present disclosure. The arrival alerting apparatus may be applied to an electronic device. The electronic device includes a processor, a low power chip and a microphone. The arrival alerting device may comprise a request receiving module 301, a number determination module 302, an audio capturing module 303, an audio recognition module 304 and an arrival alerting module 305.

The request receiving module 301 is configured to receive the arrival alerting request via the processor and determine the target public transport stop that the arrival alerting operation is required to be performed, based on the arrival alerting request.

The number determination module 302 is configured to enable the processor to enter the sleeping mode and acquire, via the low power chip, the target number of public transport stops that the electronic device needs to pass to reach the target public transport stop.

The audio capturing module 303 is configured to control, via the low power chip, the microphone to capture the external audio signal and provide the audio signal to the low power chip.

The audio recognition module 304 is configured to recognize, via the low power chip, the audio signal to obtain the number of stops that are passed by the electronic device.

The arrival alerting module 305 is configured to wake up the processor via the low power chip when the number of the above-mentioned stops is equal to the target number of public transport stops, and configured to execute, via the processor, the predetermined arrival alerting operation.

In an embodiment, while recognizing the audio signal to obtain the number of stops that are passed by the electronic device, the audio recognition module 304 is further configured to perform following operations.

The audio recognition module 304 determines, via the low power chip, whether the audio signal includes the frequency component corresponding to the public transport stop.

The audio recognition module 304 obtains, via the low power chip, the number of the above-mentioned stops, based on number of times that the audio signal is determined as including the frequency component corresponding to the public transport stop.

In an embodiment, while determining whether the audio signal includes the frequency component corresponding to the public transport stop, the audio recognition module 304 is further configured to perform following operations.

The audio recognition module 304 determines, via the low power chip, whether the duration of the frequency component corresponding to the public transport stop in the audio signal reaches the predetermined duration. In response to the duration of the frequency component corresponding to the public transport stop in the audio signal reaching the predetermined duration, the audio recognition module 304 determines that the frequency component corresponding to the public transport stop is included in the audio signal.

In an embodiment, while determining whether the duration of the frequency component corresponding to the public transport stop in the audio signal reaching the predetermined duration, the audio recognition module 304 is further configured to perform following operations.

The audio recognition module 304 performs, via the low power chip, the non-overlapping frame splitting process on the audio signal to obtain a plurality of audio frames.

The audio recognition module 304 performs, via the low power chip, the Fourier transform on the plurality of audio frames. The audio recognition module 304 recognizes whether amplitudes of consecutive audio frames of the frequency component within the predetermined duration each reaches a predetermined amplitude, based on a Fourier transform result. In response to the amplitudes of consecutive audio frames of the frequency component within the predetermined duration each reaching the predetermined amplitude, the audio recognition module 304 determines that the duration of the frequency component in the audio signal reaches the predetermined duration.

In an embodiment, before waking up, via the low power chip, the process, the arrival alerting module 305 is configured to perform following operations.

When the number of public transport stops that are passed by the electronic device is equal to the target number of public transport stops, the arrival alerting module 305 obtains, via the low power chip, the base station identifier of the base station that establishes mobile communication connection with the electronic device.

The arrival alerting module 305 determines, via the low power chip, a public transport stop corresponding to the base station identifier, based on the predetermined correspondence between the base station identifier and the public transport stop.

When the public transport stop is the target public transport stop, the arrival alerting module 305 determines wakes up the processor via the low power chip.

In an embodiment, the arrival alerting apparatus further includes an application running module. Before receiving the arrival alerting request via the processor, the application running module is configured to perform following operations.

When the processor is in the sleeping mode, the application running module generates, via the low power chip, an application entrance for a public transport application.

The application running module controls, via the low power chip, the application entrance to be displayed when the screen of the electronic device is off.

When a triggering operation performed on the application entrance is received, the application running module wakes up the processor via the low power chip, and runs, via the processor, the public transport application in the foreground.

While receiving the arrival alerting request via the processor, the request receiving module 301 is further configured to perform following operations.

The request receiving module 301 receives, via the public transport application run in the foreground, the arrival alerting request.

In an embodiment, before waking up the processor via the low power chip when the number of the above-mentioned stops is equal to the target number of public transport stops, and executing, via the processor, the predetermined arrival alerting operation, the arrival alerting module 305 is configured to perform following operations.

The arrival alerting module 305 determines, via the low power chip, the public transport stop in real time that the electronic device is currently arriving, based on the number of the above-mentioned public transport stops.

The arrival alerting module 305 obtains, via the low power chip, in real time a stop information of the current public transport stop.

The arrival alerting module 305 controls, via the low power chip, the stop information to be displayed on the screen of the electronic device in the screen-off manner.

To be noted that, the arrival alerting apparatus in the present disclosure provides a same invention concept as the arrival alerting method in the above embodiments. Any of the methods provided in the arrival alerting method can be applied on the arrival alerting apparatus. Detailed operations may be referred to above embodiments, and will not be repeatedly described herein.

Embodiments of the present disclosure further provide a storage medium, which stores a computer program for performing the arrival alerting method. When the stored computer program is executed on the electronic device provided by the present disclosure, the electronic device is enabled to perform the operations in the arrival alerting method as provided by embodiments of the present disclosure. The storage medium may be a magnetic disk, an optical disk, a Read Only Memory (ROM) or a Random Access Memory (RAM), and so on.

The present disclosure further provides an electronic device, as shown in FIG. 7. The electronic device includes a processor 401, a low power chip 402, a microphone 403 and a memory 404. Power consumption of the low power chip 402 is less than power consumption of the processor 401. The low power chip 402 and the processor 401 establish communication connection via a communication bus (such as an I2C bus) to achieve data interaction.

To be noted that, the low power chip of the present embodiment has the audio recognition capability. Power consumption of the low power chip may be less than that of the processor of the electronic device. Any ordinary skilled person in the art may select a low power chip model depending on actual needs. For example, the low power chip model that can be selected may include, but not limited to, LPCXpresso 54628, LPC2138, LPC2138, LPC54114 and LPC3100.

The processor in the present embodiment may be a general-purpose processor. Any ordinary skilled person in the art may select a processor model depending on actual needs. For example, the processor model that can be selected may include, but not limited to, Snapdragon 855+, Snapdragon 845, Snapdragon 820, Snapdragon 810 and Snapdragon 710.

A computer program for performing arrival alerting is stored in the memory 404, which may be a high-speed random access memory or a non-volatile memory, such as at least one disk memory device, a flash memory device, or other volatile solid memory device, and so on. Accordingly, the memory 404 may further include a memory controller to provide access to the memory 404 by the processor 401 and the low power chip 402, such that following functions may be achieved.

The processor 401 is configured to receive the arrival alerting request and determine the target public transport stop that requires the arrival alerting operation to be performed based on the arrival alerting request.

The low power chip 402 is configured to obtain the target number of stops that the electronic device needs to pass through to reach the target public transport stop; capture, via the microphone 403, the external audio signal; recognize the audio signal to obtain the number of stops that are passed by the electronic device; and wake up the processor 401 in response to the number of the above-mentioned public transport stops being equal to the target number of public transport stops.

The processor 401 is further configured to perform the predetermined arrival alerting operation.

In an embodiment, while obtaining the number of stops that are passed by the electronic device, the low power chip 402 is further configured to perform following operations.

The low power chip 402 is configured to determine whether the audio signal includes a frequency component corresponding to the public transport stop.

The low power chip 402 is configured to obtain the number of the above-mentioned public transport stops based on the number of times that the audio signal is determined as including the frequency component corresponding to the public transport stop.

In an embodiment, while determining whether the audio signal includes the frequency component corresponding to the public transport stop, the low power chip 402 is further configured to perform following operations.

The low power chip 402 is configured to determine whether a duration of the frequency component corresponding to the public transport stop in the audio signal reaches a predetermined duration. In response to the duration of the frequency component corresponding to the public transport stop in the audio signal reaching the predetermined duration, the low power chip 401 is configured to determine that the frequency component corresponding to the public transport stop is included in the audio signal.

In an embodiment, while determining whether the duration of the frequency component corresponding to the public transport stop in the audio signal reaches the predetermined duration, the low power chip 402 is further configured to perform following operations.

The low power chip 402 is configured to perform a non-overlapping frame splitting process on the audio signal to obtain a plurality of audio frames.

The low power chip 402 is configured to perform a Fourier transform on the plurality of audio frames. The low power chip 402 is configured to recognize whether amplitudes of consecutive audio frames of the frequency component within the predetermined duration each reaches a predetermined amplitude, based on a Fourier transform result. In response to the amplitude of each of consecutive audio frames of the frequency component within the predetermined duration reaching the predetermined amplitude, the low power chip 402 is configured to determine that the duration of the frequency component in the audio signal reaches the predetermined duration.

In an embodiment, before waking up the processor 401, the low power chip 402 is further configured to perform following operations.

When the number of public transport stops that are passed by the electronic device is equal to the target number of public transport stops, the low power chip 402 is configured to obtain the base station identifier of the base station that establishes mobile communication connection with the electronic device.

The low power chip 402 is configured to determine the public transport stop corresponding to the base station identifier based on the predetermined correspondence between the base station identifier and the public transport stop.

When the public transport stop is the target public transport stop, the low power chip 402 is configured to wake up the processor.

In an embodiment, before the processor 401 receives the arrival alerting request, the low power chip 402 is further configured to perform following operations.

When the processor 401 is in the sleeping mode, the low power chip 402 is configured to generate an application entrance for a public transport application.

The low power chip 402 is configured to control the application entrance to be displayed when the screen of the electronic device is off.

When a triggering operation performed on the application entrance is received, the low power chip 402 is configured to wake up the processor 401.

The processor 401 is configured to run the public transport application in the foreground.

While receiving the arrival alerting request, the processor 401 is configured to perform following operations.

The processor 401 is configured to receive the arrival alerting request via the public transport application run in the foreground.

In an embodiment, before waking up the processor when the number of public transport stops is the same as the target number of public transport stops, the low power chip 402 is further configured to perform following operations.

The low power chip 402 is further configured to determine the public transport stop in real time that the electronic device is currently arriving, based on the number of the above-mentioned public transport stops.

The low power chip 402 is further configured to obtain in real time a stop information of the current public transport stop.

The low power chip 402 is further configured to control the stop information to be displayed on the screen of the electronic device in the screen-off manner.

To be noted that, the electronic device in the present disclosure provides a same invention concept as the arrival alerting method in the above embodiments. Any of the methods provided in the arrival alerting method can be applied on the electronic device. Detailed operations may be referred to above embodiments, and will not be repeatedly described herein.

To be noted that, for the arrival alerting method of the present disclosure, any ordinary skilled person in the art that shall understand that all or part of the operations of the arrival alerting method of the present disclosure can be accomplished by a computer program controlling relevant hardware. The computer program may be stored in a computer readable storage medium, such as in a memory of the electronic device, and may be executed by the processor and the low power chip. While executing the computer program, a process such as operations of the arrival alerting method may be performed. The storage medium may be a disk, an optical disk, a read-only memory, a random access memory, and so on.

In the above, only one arrival alerting method, one storage medium, and one electronic device are described in detail. Detailed examples are provided for illustrating principles and implementation methods of the present disclosure. The above examples are only described to help understand the method and the essential idea of the present disclosure. For any ordinary skilled person in the art, based on the idea of the present disclosure, changes may be performed on implementations and applications. In summary, the content of the present disclosure shall not be interpreted as a limitation of the present disclosure.

**Claims**

1. An arrival alerting method, applied to an electronic device, wherein the electronic device comprises a microphone, a processor, a low power chip, power consumption of the low power chip is less than that of the processor; and the method comprises:

   > receiving, via the processor, an arrival alerting request and determining a target public transport stop that requires an arrival alerting operation to be performed based on the arrival alerting request;
   > the processor entering a sleeping mode, and obtaining, via the low power chip, a target number of public transport stops that the electronic device needs to pass through to reach the target public transport stop;
   > controlling, via the low power chip, the microphone to capture an external audio signal and to provide the audio signal to the low power chip;
   > recognizing, via the low power chip, the audio signal to obtain the number of public transport stops that are passed by the electronic device; and
   > waking up the processor via the low power chip in response to the number of public transport stops being equal to the target number of public transport stops; and performing, via the processor, a predetermined arrival alerting operation.

2. The arrival alerting method according to claim 1, wherein the recognizing, via the low power chip, the audio signal to obtain the number of public transport stops that are passed by the electronic device, comprises:

   > determining, via the low power chip, whether the audio signal includes a frequency component corresponding to the public transport stop ; and obtaining, via the low power chip, the number of the public transport stops based on the number of times that the audio signal is determined as including the frequency component corresponding to the public transport stop.

3. The arrival alerting method according to claim 2, wherein the determining, via the low power chip, whether the audio signal includes a frequency component corresponding to the public transport stop , comprises:

   > determining, via the low power chip, whether a duration of the frequency component corresponding to the public transport stop in the audio signal reaches a predetermined duration; and determining the audio signal comprises the frequency component corresponding to the public transport stop in response to the duration of the frequency component corresponding to the public transport stop in the audio signal reaching the predetermined duration.

4. The arrival alerting method according to claim 3, wherein the determining, via the low power chip, whether a duration of the frequency component corresponding to the public transport stop in the audio signal reaches a predetermined duration, comprises:

   > performing, via the low power chip, a non-overlapping frame splitting process on the audio signal to obtain a plurality of audio frames; and performing, via the low power chip, a Fourier transform on the plurality of audio frames, determining whether amplitudes of consecutive audio frames of the plurality of audio frames of the frequency component within the predetermined duration each reaches a predetermined amplitude, and determining that the duration of the frequency component in the audio signal reaches the predetermined duration in response to the amplitudes of consecutive audio frames of the plurality of audio frames of the frequency component within the predetermined duration each reaching the predetermined amplitude.

5. The arrival alerting method according to claim 2, wherein before the determining, via the low power chip, whether the audio signal includes a frequency component corresponding to the public transport stop , the method further comprises:

filtering, via the low power chip, a human voice frequency component out of the audio signal.

**6.** The arrival alerting method according to claim 1, wherein before the waking up the processor via the low power chip, the method further comprises:

obtaining, via the low power chip, a base station identifier of a base station that establishes mobile communication connection with the electronic device in response to the number of public transport stops that are passed by the electronic device is equal to the target number of public transport stops; and

determining, via the low power chip, a public transport stop corresponding to the base station identifier based on predetermined correspondence between the base station identifier and the public transport stop; and

waking up the processor via the low power chip in response to the public transport stop being the target public transport stop.

**7.** The arrival alerting method according to claim 1, wherein before the receiving, via the processor, an arrival alerting request, the method further comprises:

generating, via the low power chip, an application entrance for a public transport application, when the processor is in the sleeping mode;

controlling, via the low power chip, the application entrance to be displayed on a screen of the electronic device in a screen-off manner; and

waking up the processor via the low power chip in response to a triggering operation performed on the application entrance being received; running, via the processor, the public transport application in the foreground; and

the receiving, via the processor, an arrival alerting request, comprises:

receiving, via the public transport application run in the foreground, the arrival alerting request.

**8.** The arrival alerting method according to claim 1, wherein the waking up the processor via the low power chip in response to the number of public transport stops being equal to the target number of public transport stops; and performing, via the processor, a predetermined arrival alerting operation, comprises:

determining, via the low power chip, a current public transport stop in real time that the electronic device is currently arriving based on the number of public transport stops;

obtaining, via the low power chip, in real time a stop information of the current public transport stop; and

controlling, via the low power chip, the stop information to be displayed on a screen of the electronic device in the screen-off manner.

**9.** The arrival alerting method according to claim 1, wherein the obtaining, via the low power chip, a target number of public transport stops that the electronic device needs to pass through to reach the target public transport stop, comprises:

determining, via the low power chip, a current public transport stop that the electronic device is currently arriving;

obtaining, via the low power chip, a route information that comprises a route from the current public transport stop to the target public transport stop; determining the target number of public transport stops based on the route information, the current public transport stop and the target public transport stop.

**10.** An arrival alerting apparatus, applied to an electronic device, wherein the electronic device comprises a microphone, a processor, a low power chip, power consumption of the low power chip is less than that of the processor; and the arrival alerting apparatus comprises:

a request receiving module, configured to receive an arrival alerting request via the processor and determine a target public transport stop that an arrival alerting operation is required to be performed, based on the arrival alerting request;

a number determination module, configured to enable the processor to enter the sleeping mode and obtain, via the low power chip, the target number of public transport stops that the electronic device needs to pass to reach the target public transport stop;

an audio capturing module, configured to control, via the low power chip, the microphone to capture the external audio signal and provide the audio signal to the low power chip;

an audio recognition module, configured to recognize, via the low power chip, the audio signal to obtain the number of public transport stops that are passed by the electronic device; and

an arrival alerting module, configured to wake up the processor via the low power chip when the number of public transport stops is equal to the target number of public transport stops and configured to execute, via the processor, a predetermined arrival alerting operation.

11. A storage medium, storing computer programs, wherein the computer programs are capable of being executed in an electronic device; the electronic device comprises a microphone, a processor, and a low power chip; power consumption of the low power chip is less than that of the processor; and when the computer programs are executed, the electronic device is enabled to perform:

   receiving, via the processor, an arrival alerting request and determining a target public transport stop that requires an arrival alerting operation to be performed based on the arrival alerting request;

   the processor entering a sleeping mode, and obtaining, via the low power chip, a target number of public transport stops that the electronic device needs to pass through to reach the target public transport stop;

   controlling, via the low power chip, the microphone to capture an external audio signal and to provide the audio signal to the low power chip;

   recognizing, via the low power chip, the audio signal to obtain the number of public transport stops that are passed by the electronic device; and

   waking up the processor via the low power chip in response to the number of public transport stops being equal to the target number of public transport stops; and performing, via the processor, a predetermined arrival alerting operation.

12. An electronic device, comprising a microphone, a processor, and a low power chip; wherein power consumption of the low power chip is less than that of the processor;

   wherein, the processor is configured to receive an arrival alerting request, determine a target public transport stop that requires an arrival alerting operation to be performed based on the arrival alerting request, and enter a sleeping mode after setting the target public transport stop;

   the low power chip is configured to:

   obtain a target number of public transport stops that the electronic device needs to pass through to reach the target public transport stop;

   capture, via the microphone, an external audio signal;

   recognize the audio signal to obtain the number of public transport stops that are passed by the electronic device; and

   wake up the processor in response to the number of the public transport stops being equal to the target number of public transport stops; and

   the processor is further configured to perform a predetermined arrival alerting operation.

13. The electronic device according to claim 12, wherein the low power chip is configured to:

   determine whether the audio signal includes a frequency component corresponding to a public transport stop;

   obtain the number of public transport stops based on the number of times that the audio signal is determined as including the frequency component corresponding to the public transport stop.

14. The electronic device according to claim 13, wherein the low power chip is configured to:

   determine whether a duration of the frequency component corresponding to the public transport stop in the audio signal reaches a predetermined duration; and

   determine that the audio signal comprises the frequency component corresponding to the public transport stop in response to the duration of the frequency component corresponding to the public transport stop in the audio signal reaching the predetermined duration.

15. The electronic device according to claim 13, wherein the low power chip is configured to:

   perform a non-overlapping frame splitting process on the audio signal to obtain a plurality of audio frames; and

   perform a Fourier transform on the plurality of audio frames;

   determine whether amplitudes of consecutive audio frames of the plurality of audio frames of the frequency component within the predetermined duration each reaches a predetermined amplitude, based on a Fourier transform result;

   determine that the duration of the frequency component in the audio signal reaches the predetermined duration in response to the amplitudes of consecutive audio frames of the plurality of audio frames of the frequency component within the predetermined duration each reaching the predetermined amplitude.

16. The electronic device according to claim 13, wherein the low power chip is further configured to filter a human voice frequency component out of the audio signal.

17. The electronic device according to claim 12, wherein the low power chip is further configured to:

    obtain a base station identifier of a base station that establishes mobile communication connection with the electronic device in response to the number of public transport stops that are passed by the electronic device is equal to the target number of public transport stops; and
    determine a public transport stop corresponding to the base station identifier based on predetermined correspondence between the base station identifier and the public transport stop; and
    wake up the processor in response to the public transport stop being the target public transport stop.

18. The electronic device according to claim 12, wherein the low power chip is further configured to:

    generate an application entrance for a public transport application, when the processor is in the sleeping mode;
    control the application entrance to be displayed on a screen of the electronic device in a screen-off manner; and
    wake up the processor in response to a triggering operation performed on the application entrance being received; and
    the processor is configured to:

        run the public transport application in the foreground; and
        receive, via the public transport application run in the foreground, the arrival alerting request.

19. The electronic device according to claim 12, wherein the low power chip is further configured to:

    determine a current public transport stop in real time that the electronic device is currently arriving based on the number of public transport stops;
    obtain in real time a stop information of the current public transport stop; and
    control the stop information to be displayed on a screen of the electronic device in the screen-off manner.

20. The electronic device according to claim 12, wherein the low power chip is further configured to:

    determine a current public transport stop that the electronic device is currently arriving;
    obtain a route information that comprises a route from the current public transport stop to the target public transport stop;
    determine the target number of public transport stops based on the route information, the current public transport stop and the target public transport stop.

a processor receives an arrival alerting request and determines a target public transport stop that requires an arrival alerting operation to be performed based on the arrival alerting request — 101

the processor enters a sleeping mode, and the low power chip obtains a target number of stops that the electronic device needs to pass through to reach the target public transport stop — 102

the low power chip controls the microphone to capture an external audio signal and provides the audio signal to the low power chip — 103

the low power chip recognizes the audio signal to obtain the number of stops that are passed by the electronic device — 104

in response to the number of the above-mentioned public transport stops being equal to the target number of public transport stops, the low power chip wakes up the processor, and the processor performs a predetermined arrival alerting operation — 105

FIG. 1

Stop 1;
Stop 2;
Stop 3;
Stop 4;
Stop 5;
Stop 6;
Stop 7;
Stop 8;
Stop 9

Stop 1;
Stop 2;
Stop 3;
Stop 4;
Stop 5;
Stop 6;
Stop 7;
Stop 8;
Stop 9

Arrival alerting interface

FIG. 2

FIG. 3

Audio signal

First audio
frame

Second audio
frame

......

*m*-th audio
frame

FIG. 4

when the processor is in the sleeping mode, the low power chip generates the application entrance for the public transport application, and the application entrance may be displayed on the screen of the electronic device in the screen-off manner — 201

the low power chip wakes up the processor when the triggering operation performed on the application entrance is received — 202

the processor runs the public transport application in the foreground and receives the arrival alerting request via the public transport application — 203

the processor determines the target public transport stop that the arrival alerting operation is required to be performed, based on the arrival alerting request, and enters the sleeping mode subsequently — 204

the low power chip obtains the target number of public transport stops that the electronic device needs to pass to reach the target public transport stop — 205

the low power chip captures the external audio signal via the microphone and identifies the audio signal to obtain the number of stops that the electronic device has already passed — 206

The number of stops reaching the target number of stops?

YES

NO — 207

— 208

when the number of stops reaches the target number of stops, the low power chip wakes up the processor, and the processor performs the predetermined arrival alerting operation

the low power chip determines in real time the public transportation stop that the electronic device is currently arriving based on the number of stops when the number of stops does not reach the target number of stops, and obtains in real time the stop information of the current public transportation stop. The stop information is displayed on the screen in the screen-off manner

FIG. 5

Arrival alerting apparatus

Request receiving module 301

Number determining module 302

Audio recognition module 304

Audio capturing module 303

Arrival alerting module 305

FIG. 6

Microphone 403

Low power chip 402

Processor 401

Memory 404

Electronic device

FIG. 7

## INTERNATIONAL SEARCH REPORT

| International application No. |
| --- |
| **PCT/CN2020/134311** |

**A.    CLASSIFICATION OF SUBJECT MATTER**

G10L 15/22(2006.01)i;  H04M 1/725(2021.01)i;  G08G 1/133(2006.01)i

According to International Patent Classification (IPC) or to both national classification and IPC

**B.    FIELDS SEARCHED**

Minimum documentation searched (classification system followed by classification symbols)

G10L15/-;H04M1/725;G08G1/-

Documentation searched other than minimum documentation to the extent that such documents are included in the fields searched

Electronic data base consulted during the international search (name of data base and, where practicable, search terms used)

CNKI, CNPAT, EPODOC, WPI: 频率, 时长, 长度, 声音, 音频, 语音, 阈值, 超过, 到站, 站点, 提醒, 提示, 车站, 公交站, 地铁站, 数量, 个数, 次数, 基站, 站台, 低功耗, 省电, 节电, count+, number+, audio, voice+, low+ , power+, speech, frequenc+, station, bus, base, time, arrival, arrive, distance , range , alert

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 110971763 A (OPPO (CHONGQING) INTELLIGENT TECHNOLOGY CO., LTD.) 07 April 2020 (2020-04-07)<br>        description paragraphs [0034]-[0221] | 1-20 |
| X | CN 106710283 A (SHANGHAI YUDE INFORMATION TECHNOLOGY CO., LTD.) 24 May 2017 (2017-05-24)<br>        description paragraphs [0044]-[0058], [0070]-[0084], figure 1 | 1, 6-12, 17-20 |
| Y | CN 106710283 A (SHANGHAI YUDE INFORMATION TECHNOLOGY CO., LTD.) 24 May 2017 (2017-05-24)<br>        description paragraphs [0044]-[0058], [0070]-[0084], figure 1 | 2, 5, 13, 16 |
| Y | CN 105577943 A (SHANGHAI DROI TECHNOLOGY CO., LTD.) 11 May 2016 (2016-05-11)<br>        description, paragraphs [0041]-[0067] | 2, 5, 13, 16 |
| A | US 2014171156 A1 (PATTIKONDA Ram et al.) 19 June 2014 (2014-06-19)<br>        entire document | 1-20 |
| A | US 2010214134 A1 (WEISSER Kimberly et al.) 26 August 2010 (2010-08-26)<br>        entire document | 1-20 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **04 February 2021** | **03 March 2021** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2020/134311**

| Patent document cited in search report | | | Publication date (day/month/year) | Patent family member(s) | | | Publication date (day/month/year) |
|---|---|---|---|---|---|---|---|
| CN | 110971763 | A | 07 April 2020 | None | | | |
| CN | 106710283 | A | 24 May 2017 | None | | | |
| CN | 105577943 | A | 11 May 2016 | None | | | |
| US | 2014171156 | A1 | 19 June 2014 | US | 9002420 | B2 | 07 April 2015 |
| US | 2010214134 | A1 | 26 August 2010 | US | 8125353 | B2 | 28 February 2012 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201911261613X